# EUROPEAN PATENT SPECIFICATION

(11) **EP 0 513 308 B1**
(45) Date of publication and mention of the grant of the patent: **12.04.1995**
(21) Application number: 92900628.6
(22) Date of filing: 29.11.1991
(51) Int. Cl.: H04B 7/26

(54) **A RADIO SYSTEM**
FUNKSYSTEM
SYSTEME RADIO

(30) Priority: 04.12.1990 FI 905995
(43) Date of publication of application: 19.11.1992
(73) Proprietor: NOKIA TELECOMMUNICATIONS OY, 02600 Espoo (FI)
(72) Inventor: PAAVONEN, Tapio, SF-43100 Saarijärvi (FI); TÖYRYLÄ, Hannu, SF-01600 Vantaa (FI); TIURANIEMI, Riitta, SF-00530 Helsinki (FI)
(74) Representative: Tomlinson, Kerry John
(86) International application number: FI9100365
(87) International publication number: WO9210886

(56) References cited:
- EP-A- 0 318 033
- US-A- 4 527 284
- US-A- 4 633 509
- US-A- 4 765 753

## Description

The invention relates to a radio system comprising several fixed radio stations positioned apart from each other within a coverage area of the radio system, and at least one mobile radio station signalling with a single fixed radio station at a time, the system further comprising at least one frequency channel serving as a control channel and time-shared between several fixed radio stations for the transmission of control signalling.

In certain mobile radio systems, one frequency channel is shared on a time basis between several fixed radio stations i.e. base stations which transmit on this control channel sequentially in turns. Such a system is used when the number of the available radio channels is limited and the radio traffic is light. In a mobile radio system of this type, each mobile radio station, e.g. mobile telephone, responds only to the control signalling of the particular base station with which it is currently registered and normally signals back towards the system (exchange) only during the reception of the control signal of this base station. If, however, the level of the signal of the current base station is no longer sufficient, the mobile radio station selects a new base station on the basis of the strength of control signals it receives from the other base stations, and registers with the selected base station. It may thereby take a very long time before a suitable new base station is found by means of the signal strength measurements when the current base station has to be abandoned. The problem is aggravated by the fact that the system utilizes time-shared control channels, as it is highly probable that when a mobile station has selected a certain time-shared control channel for a signal strength measurement, there is a signalling break on the selected channel, and so there is no control signal to be measured. On the other hand, if a mobile radio station waits on the channel until the signalling break ends, plenty of time is spent on control channels with no control signal, which increases the time required for hunting a new base station. The problem becomes even worse with increasing number of base stations and control channels.

The object of the invention is provide an improvement in a radio system of this type.

The improvement is achieved by means of a radio system of the type described in the introduction, wherein said at least one mobile radio station measures the signal strength of signalling transmitted by the other fixed radio stations on the same and/or another control channel between the signalling periods of its current fixed radio station, and that at the end of the signalling period of each fixed radio station, information is transmitted on the length of the period of time the mobile station has for measuring the signallings of the other fixed radio stations before a subsequent signalling period of the same fixed radio station.

In the invention, the mobile radio station utilizes the signalling breaks of its current base station which inevitably occur on the time-shared control channel for measuring the field strengths of adjacent base stations and storing the measuring results. When the mobile radio station has to change the base station, it can utilize these prestored measuring results in the selection of a new base station, and so the procedure for changing the base station (a hand-over procedure) can be carried out more rapidly. This is an advantage especially when it is necessary to change the base station in connection with a call set-up situation. The signalling of each base station contains data on the length of the period during which the mobile radio station can measure the signalling of the other base stations before the start of a signalling period of this particular base station. This is an advantage especially when the length of the signalling period assigned to the base station on the control channel is dynamically variable so that an optimal call setup time is obtained in different situations.

In the following the invention will be described in greater detail by means of an illustrating embodiment with reference to the attached figure, which shows one possible radio system in which the invention can be applied.

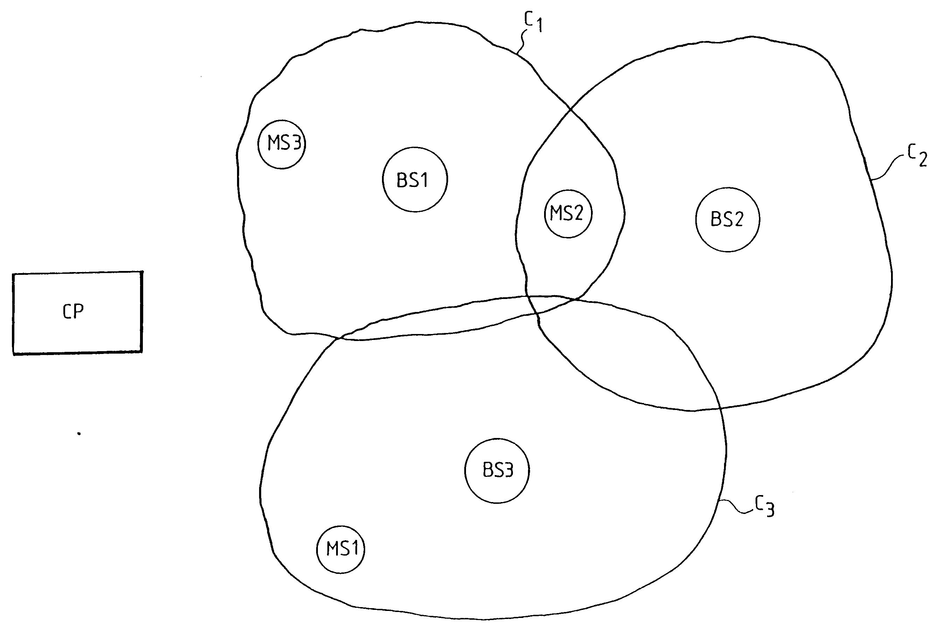

Figure 1 shows a mobile radio system in which the geographical area covered by the system is divided into smaller radio areas or radio cells C1, C2 and C3, preferably in such a way that the peripheral portions of adjacent cells overlap. Frequency channels are allocated to the cells for speech or data calls so that at least neighbouring cells utilize different frequencies. Each cell C1, C2 and C3 comprises at least one fixed multi-channel transceiver equipment BS1, BS2 and BS3, called a base station herein. All the base stations BS1, BS2 and BS3 are coupled to a system controller CP, which controls the operation of the entire system.

For control signalling, such as call set-up signalling, the base stations BS1, BS2 and BS3 in the system have a common frequency channel as a control channel, and they use this frequency channel sequentially on a time-sharing basis for the transmission of their control messages or signalling bursts. The system may comprise several base station groups each having their own control channel. The signalling sequence on the control channel starts from a certain base station and terminates in a pause before the sequence is restarted with the transmission of the signalling burst of the same base station. In the preferred embodiment of the invention, signalling bursts transmitted on the control channel comply with the MPT standard 1327 issued by the British Department of Trade and Industry. Thus each signalling burst is preceded by a pause during which none of the base stations BS transmits on the control channel. Each signalling burst contains a frame which begins with the fields LET, PREAMBLE and SYNC, as specified in the MPT standard 1327, chapter 3.3.3.1. At the end of the burst the base station BS transmits a burst terminating message BT. Each signalling burst is also marked with the identifier of the transmitting base station.

One or more transceivers, i.e. mobile radio stations (e.g. mobile telephones) MS1, MS2 and MS3 roam freely within the area of the mobile radio system. Each active mobile station MS must be registered with one of the base stations when it roams within the system. In this way the system keeps a register on the rough location of the mobile stations MS for the call set-up procedures. The mobile stations MS are allowed to roam freely from one cell C to another if only they register with the base station BS of the new cell C on transition. The mobile station MS is considered to be active in the cell C when the mobile station has selected the cell in accordance with a predetermined procedure, the base station BS of the cell has transmitted a signalling burst and the mobile station MS has received the identifier of the base station. This selecting procedure can be based on the signal strength received from the different base stations and to the quality of signalling in view of the mobile station MS.

The mobile station MS is able to transmit signalling messages only when the base station BS of the cell C in which the mobile station is active is signalling simultaneously on the control channel. The mobile station MS is also able to receive signalling bursts from the other base stations, but it is thereby not able to respond to the messages it has received. When the mobile station receives signalling bursts from different base stations sequentially, the signal strength (field strength) and the bit error ratio may vary from one burst to another, whereby it is possible for the mobile station to measure these parameters between subsequent signalling periods of the base station BS with which the mobile station MS is currently registered. For this purpose, at the end of each signalling burst transmitted on the control channel by the base station BS, there is provided data on the length of the period of time available for the measurements of the signal strength of the other base stations before a new signalling burst of the same station. Between the signalling bursts of the current base station, the mobile station MS may also measure other time-shared control channels, if there are any.

In the preferred embodiment of the invention, the base station BS starts the signalling break on the time-shared control channel by transmitting a particular burst terminating message BT to announce the end of the signalling burst on that particular base station BS and to give the mobile radio stations a permission to measure the signal strength of the adjacent base stations for a given number of time slots in said time-shared control channel. For this purpose, the burst terminating message comprises an N bit data field (e.g. an 8 bit data field) that gives the number of time slots that the mobile radio stations can use for measuring the signal strength of the adjacent base stations.

The mobile station stores the results from the signal strength measurements in a memory by using the base station identifiers obtained with the bursts as indices. Thus each mobile station MS is able to keep a list on the adjacent base stations and their measured signal strengths, being thus able to rapidly change the base station without measurings in a call set-up situation.

The invention is particularly advantageous in a radio system in which the length of each different signalling burst of each base station BS on the control channel can be varied dynamically on the basis of the number of inbound and outbound messages at the base station between minimum and maximum values given to the base station BS in question. The total duration of the burst sequence may thereby also vary. Such a radio system is disclosed in a copending PCT Patent Application claiming priority from Finnish Patent Application 905994, published at 25 June 1992 as WO-A-92/10885.

As for the mobile station MS, the control channel signallings mentioned above naturally occur only when the mobile station has no call and listens to the control channel.

The figure and the description related to it are only intended to illustrate the present invention. In its details, the radio system according to the invention may vary within the scope of the attached claims.

## Claims

1. A radio system comprising several fixed radio stations (BS1, BS2, BS3) positioned apart from each other within a coverage area of the radio system, and at least one mobile radio station (MS1, MS2, MS3) signalling with a single fixed radio station at a time, the system further comprising at least one frequency channel serving as a control channel and time-shared between several fixed radio stations for the transmission of control signalling, **characterized** in that said at least one mobile radio station (MS1, MS2, MS3) is adapted to measure the signal strength of signalling transmitted by the other fixed radio stations on the same and/or another control channel between the signalling periods of its current fixed radio station (BS1, BS2, BS3), and that each fixed radio station (BS1, BS2, BS3) is adapted to transmit on the control channel at the end of its control signalling period information on the length of the period of time the mobile station (MS1, MS2, MS3) has for measuring said signal strength of the control signalling of the other fixed radio stations before a subsequent signalling period of the same fixed radio station.

2. A radio system according to claim 1, **characterized** in that the length of the signalling period assigned to each fixed radio station (BS1, BS2, BS3) on said control channel is variable between minimum and maximum values specific for the fixed radio station on the basis of the number of messages signalled to and from the fixed radio station.

3. A radio system according to claim 1 or 2, **characterized** in that the mobile radio station (MS1, MS2, MS3) comprises a memory for storing the measuring results for subsequent use in connection with the selection of a new fixed radio station (BS1, BS2, BS3).

## Patentansprüche

1. Funksystem mit mehreren festen Funkstationen (BS1, BS2, BS3), die innerhalb eines Reichweitenbereiches des Funksystems voneinander beabstandet positioniert sind, und mit wenigstens einer mobilen Funkstation (MS1, MS2, MS3), die zu einem Zeitpunkt mit einer einzigen festen Funkstation in Signalfunkverbindung steht, wobei das System ferner wenigstens einen Frequenzkanal aufweist, der als Steuerkanal dient und der zwischen den mehreren festen Funkstationen zur Übertragung der Steuersignalabgabe im Time-sharing-Betrieb benutzt wird,
dadurch gekennzeichnet,
daß wenigstens eine mobile Funkstation (MS1, MS2, MS3) dazu ausgelegt ist, die Signalstärke der Signalabgabe zu messen, die von den anderen festen Funkstationen auf demselben und/oder einem anderen Steuerkanal zwischen den Signalabgabeperioden ihrer aktuellen festen Funkstation (BS1, BS2, BS3) gesendet wird,
und daß jede feste Funkstation (BS1, BS2, BS3) dazu ausgelegt ist, auf dem Steuerkanal am Ende ihrer Steuersignalabgabeperiode Informationen über die Länge der Zeitperiode zu senden, die der mobilen Funkstation (MS1, MS2, MS3) zur Verfügung steht, um die Signalstärke der Steuersignalabgabe der anderen festen Funkstationen vor einer nachfolgenden Signalabgabeperiode derselben festen Funkstation zu messen.

2. Funksystem nach Anspruch 1,
dadurch gekennzeichnet,
daß die Länge der Signalabgabeperiode, die jeder festen Funkstation (BS1, BS2, BS3) auf dem Steuerkanal zugeordnet ist, zwischen Minimal- und Maximalwerten variabel ist, die für die feste Funkstation auf der Grundlage der Anzahl von Nachrichten spezifisch ist, die zu und von der Funkstation übermittelt werden.

3. Funksystem nach Anspruch 1 oder 2,
dadurch gekennzeichnet,
daß die mobile Funkstation (MS1, MS2, MS3) einen Speicher aufweist, um die Meßergebnisse zur nachfolgenden Verwendung in Verbindung mit der Auswahl einer neuen festen Funkstation (BS1, BS2, BS3) zu verwenden.

## Revendications

1. Réseau radio comprenant plusieurs stations radio fixes (BS1, BS2, BS3) espacées les unes des autres dans une zone de couverture du réseau radio, et au moins une station radio mobile (MS1, MS2, MS3) échangeant des signaux avec une seule station radio fixe à la fois, le réseau comportant en outre au moins une bande de fréquences servant de bande de fréquences de commande et en temps partagé entre plusieurs stations radio fixes pour la transmission de signaux de commande, caractérisé en ce que ladite station radio mobile au moins unique (MS1, MS2, MS3) est conçue pour mesurer la puissance des signaux transmis par les autres stations radio fixes sur la même bande de fréquences de commande et/ou sur une autre bande entre les périodes de transmission de signaux de sa station radio fixe concernée (BS1, BS2, BS3) et en ce que chaque station radio fixe (BS1, BS2, BS3) est conçue pour transmettre dans la bande de fréquences de commande, à la fin de sa période de transmission de signaux de commande, des informations sur la durée du laps de temps dont dispose la station mobile (MS1, MS2, MS3) pour mesurer ladite puissance de signaux de la transmission de signaux de commande des autres stations radio fixes avant une période suivante de transmission de signaux pour la même station radio fixe.

2. Réseau radio selon la revendication 1, caractérisé en ce que la durée de la période de transmission de signaux attribuée à chaque station radio fixe (BS1, BS2, BS3) dans ladite bande de fréquences de commande est variable entre des valeurs minimale et maximale spécifiques de la station radio fixe en fonction du nombre de messages arrivant à la station radio fixe et partant de cette dernière.

3. Réseau radio selon la revendication 1 ou 2, caractérisé en ce que la station radio mobile (MS1, MS2, MS3) comporte une mémoire pour stocker les résultats de mesures afin de les réutiliser dans le cadre de la sélection d'une nouvelle station radio fixe (BS1, BS2, BS3).
